# EUROPEAN PATENT APPLICATION

(11) **EP 3 561 537 A1**
(43) Date of publication of application: **30.10.2019**
(21) Application number: 18305495.6
(22) Date of filing: 23.04.2018
(51) Int. Cl.: G01S 5/16

(54) **METHOD AND APPARATUS FOR DETECTION OF ENTITIES IN AN ENVIRONMENT**

(71) Applicant: Ecole Nationale de l'Aviation Civile, 31400 Toulouse Cedex (FR)
(72) Inventor: HURTER, Christophe, 31000 TOULOUSE (FR); BENHACENE, Raïlane, 31000 TOULOUSE (FR); IMBERT, Jean-Paul, 31400 TOULOUSE (FR)
(74) Representative: Bell, Mark

(57) **Abstract**

The position and optionally speed and/or size of an entity (352)such as a vehicle in an environment such as an airport, motorway, shipping port or the like may be determined by monitoring a plurality of light sources (201-209) for occlusion. These light sources may be arbitrary light sources as provided in the environment for unrelated purposes. On the basis of the known location of the light sources and the imaging devices (231-233) by means of which of the light sources are monitored, as well as knowledge of the orientation and field of view characteristics of the imaging devices, and in some cases of other physical constraints imposed on the movement of vehicles in the environment, the position of a entity can be deduced.

## Description

### Field of the invention

The present invention relates to the detection of entities in a known environment.

### Background of the invention

In many contexts it is desirable to detect any physical entity in a specified environment. The entities in question might be human beings in a public space, vehicles on a road or runway, ships in a shipping lane, animals in an enclosure, devices in a fab, mix of those categories, to cite but a few examples. The increased availability of computing power and data storage, and development of statistical tools capable of drawing meaningful information from large datasets means that it is increasingly desirable to perform such monitoring even in situations where it may not have been deemed worthwhile in the past. Meanwhile, a variety of technologies exist which have been used and some still are to a greater or lesser extent for the detection of such entities in the past.

Radar and Lidar (acronym for Light detection and ranging or laser detection and ranging) are powerful tools for building a picture of the entities present in an environment, but are dependent on sensitive and expensive hardware which will generally impose a compromise between accuracy or granularity of the available information on one hand, or cost on the other.

In many solutions, the entities themselves may be equipped with devices supporting their detection, for example by providing each entity with a GNSS (acronym for Global Navigation Satellite System) receiver and the means to share the location information obtained thereby with the monitoring system, or merely emitting some characteristic signal that can be triangulated or otherwise located by the monitoring system. Such approaches have the obvious drawback of requiring that every entity be equipped with the appropriate device, and that this equipment be maintained in operation, including power supply, even without the cooperation of the entity concerned.

In some cases ground pressure sensors, passive infrared sensors, sonar sensors or other devices may be used. These approaches tend to require substantial investment in equipping the environment with the necessary sensors and communication means, are not agile and imply an ongoing maintenance cost.

As such, a flexible and inexpensive system is required for the detection of entitles in an environment.

### Summary of the invention

In accordance with the present invention in a first aspect there is provided a system for locating an opaque entity in an environment comprising a plurality of light sources and one or more imaging devices each having a respective field of view, each respective field of view including at least one light source. The system is adapted to receive input from a plurality of imaging devices, and to determine for each light source in the field of view of each of the plurality of imaging devices whether that respective light source is occluded. The system further has access to a memory storing a geometric model of the environment including the positions of the plurality of imaging devices, the system being further adapted to determine with reference to the geometric model and the determination as to the light sources occluded for each of the plurality of imaging devices, where the entity is located.

In a development of the first aspect, the geometric model additionally comprises the positions of the light sources.

In a development of the first aspect, the system is further adapted to identify respective light sources in the field of view of two or more respective imaging devices, and to determine the position of the respective light sources with respect to the environment.

In a development of the first aspect, the system is further adapted to perform successive determinations of the location of the entity, and with reference to the timing of the successive determinations obtain a speed and direction of the entity.

In a development of the first aspect, the memory further comprises spatial definitions of features in the environment, wherein the system is further adapted to predict a collision between the entity and any feature with reference to the speed and direction of the entity.

In a development of the first aspect, the system is further adapted to determine on the basis of the geometric model of the environment and the determination as to the light sources occluded for each imaging device, the size of the entity.

In a development of the first aspect, the system is further adapted to combine entity location information obtained in accordance with any preceding claim with data from one or more further location systems.

In a development of the first aspect, the data from or more further location systems includes radar information.

In a development of the first aspect, the system is further adapted to combine the data from one or more further location systems so as to obtain a higher resolution indication of the location of the entity.

In a development of the first aspect, the system is further adapted to combine the data from one or more further locations systems so as to obtain an indication of the location of the entity having a higher reliability level.

In a development of the first aspect, the system further comprises a communication interface adapted to transmit the determination of where the entity is located to an external system.

In a development of the first aspect, the system further comprises an image processor adapted to generate a graphical representation of at least a part of the environment, and the location of the entity as determined therein.

In a development of the first aspect, the system is adapted to determine the location of a plurality of entities in the environment.

In accordance with the present disclosure, in a second aspect, there is provided a method of locating an opaque entity in an environment comprising a plurality of light sources and one or more imaging devices each having a respective field of view, each respective field of view including at least one light source, in known positions relative to the environment. The method comprises the steps of:
- receiving input from a plurality of the imaging devices,
- determining for a plurality of the light sources in the field of view of each of the plurality of imaging devices whether that respective light source is occluded,
- retrieving a geometric model of the environment, and
- determining with reference to the geometric model and the determination as to the light sources occluded for each of the plurality of imaging devices, where the entity is located.

In accordance with a second aspect there is provided a computer program comprising instructions adapted to implement the steps of the second aspect.

### Brief Description of the Drawings

The above and other advantages of the present invention will now be described with reference to the accompanying drawings, for illustration purposes only, in which:
Figure 1 presents a first embodiment;
Figure 2 shows a second embodiment, with a larger number of light sources;
Figure 3 shows the embodiment of figure 2 as seen from the perspective of the system 110;
Figure 4 shows the embodiment of figure 2 as seen from the perspective of the system 110 in further detail;
Figure 5 extends the embodiment of figure 2 to address the assessment of direction and velocity;
Figure 6 shows further detail of the assessment of direction and velocity in accordance with figure 5;
Figure 7 presents the steps of a method in accordance with an embodiment; and
Figure 8 shows a generic computing system suitable for implementation of embodiments of the invention.

### Detailed description

The present invention starts from the observation that many modern environments are increasingly provided with numerous artificial light sources. This trend has been noticeable throughout the 20^{th} century, but the arrival of cheap, high efficiency, high power white LED (acronym for Light Emitting Diode) lighting elements from the early 21^{st} century has brought a substantial acceleration, driven by the extended life time, robustness, high efficiency and , as long as they are becoming more popular, low cost of these devices. Meanwhile, another technology that has made dramatic progress in recent years is that of digital imaging, such that high resolution digital cameras are increasingly ubiquitous in commercial, industrial and urban settings.

In accordance with an embodiment, there is provided a system for locating an opaque entity in an environment comprising a plurality of discrete light sources and one or more imaging devices, each having a respective field of view, in a known spatial relationship. The field of view may be variable, for example under the effect of a "zoom" lens or the like, in which case the imaging device or corresponding controller may be adapted to communicate its current field of view to the system, or this value may be set under the control of the system. The spatial relationship of light sources and/or imaging device in the environment may not be static. For example, light sources and/or imaging device may be moved from time to time under their own power, or under the operation of an external source of locomotion. The imaging device or corresponding controller may be adapted to communicate its current position to the system, or this value may be set under the control of the system. The position of respective elements may be reported on the basis of positioning information from the elements themselves, which may be provided with locating hardware such as GNSS sensors or the like for this purpose, or by dead reckoning with respect to a known starting point, or determined by triangulation through the other imaging devices and or light sources of the system, on the basis that most elements will remain static from one measurement to the next.

The environment in question may be a public space such as a mall, airport concourse, park, town square or any other such space, such as a road, runway, shipping lane, enclosure, or any other space in which mobile entities may be expected to exist, and whose general disposition is known.

The mobile entities may be human beings, animals, vehicles including automobiles, goods vehicles, aircraft or floating vessels, or any other such mobile entity capable of motion in the environment in question such as elements on water. Concerning this last case, waterproof solutions may be implemented.

The light sources may be white or coloured LEDs, Florescent or incandescent light sources. They need not necessarily emit radiation visible to the human eye, and may for example operate in the ultraviolet or infrared ranges. As will become clear in the following description, the light sources need not be provided specifically for the purposes of the embodiment, but may include any light source provided in the environment, for example for illumination or signalling. The light sources may comprise such pre-existing or accidental light sources, or light sources specifically provided for the purposes of the present invention, or a combination of both. Light sources provided for the purposes of the present invention may comprise autonomous light emitting system comprising light source, battery and solar panels. Such devices may then be situated as convenient, regardless of the availability of power supply infrastructure. Light sources provided for the purposes of the present invention may comprise sources of light not visible to the human eye, but detectable to electronic imaging devices, permitting use of embodiments in a way that will not distract or confuse human users.

As will become clear in the following description, it may generally be desirable for as many detectable light sources as possible to be present.

The imaging devices may be any type of imaging device. They may be analogue or digital devices. Digital imaging devices may include Charge Coupled Devices or CMOS devices, or any other suitable imaging device capable of producing image data susceptible to processing in accordance with the present invention. Typically, camera devices are provided with a lens or other means for focussing incident light rays on the imaging surface. Cameras based on the pinhole approach, where divergent rays are excluded by the provision of a very small aperture, cameras using data processing techniques to obtain a sharp image from multiple unfocussed images obtained in different light frequency ranges, different timings, different points of view and the like, and so on are all also applicable. The imaging devices may be provided specifically for the purposes of the invention, or may be existing imaging devices provided for other purposes such a smart phone camera, security cameras, speed cameras and the like, and adapted for use in the present invention.

The disclosed system is advantageously adapted to receive input from a plurality of imaging devices, and to determine for a plurality of light sources in the field of view of each of the plurality of imaging devices whether that respective light source is occluded. The system further has access to a memory storing a geometric model of the environment including the positions of the camera devices. The positions in the environment of each light source may be stored in the memory or derived from the images themselves as discussed hereafter, such that the system can determine the expected position of each light source in each image provided by an imaging device, and determine by the presence or absence of an intensity peak in the corresponding position in the image whether that light is occluded. Alternatively, the system can monitor successive images to determine the position of intensity peaks corresponding to light sources, and in a case where an intensity peak disappears or is diminished from one image to the next, note that light source as having been occluded, and then determining the corresponding position or identity of that light source in the environment. Such a determination may be performed by triangulation of a plurality of occlusions, or alternatively taking into account other parameters such as the assumption that the vehicle must lie on a defined linear path defined in the environment. The positions of the light sources may be explicitly programmed into the representation of the environment as stored in the memory 111. Alternatively, the system may automatically determine the position of light sources visible to the imaging devices, since the angular relationship of each light source with respect to each imaging device can be determined on the basis of the known field of view and optical properties of the imaging device. The position of each light source can then be calculated by triangulation with respect to two or more imaging devices, whose positions in the environment are known. This approach has the advantage of making the system entirely independent of the light sources present in the environment, which may be installed or removed, turned on or off entirely independently of the system 110, but the system may still detect, locate and utilise these light sources in locating entities in accordance with embodiments of the invention. As such the system may be further adapted to identify respective light sources in the field of view of two or more respective imaging devices, and to determine the position of the respective light sources with respect to the environment.

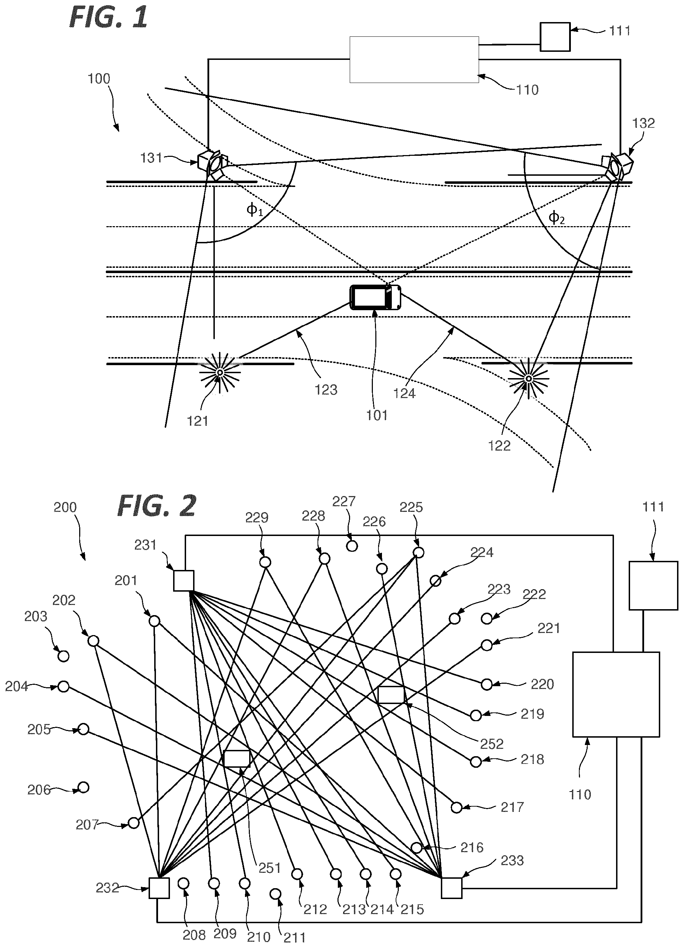

Figure 1 presents a first embodiment.

As shown in figure 1, there is an opaque entity 101 (in this example an automobile) in an environment 100 (in this case a section of road). The term opaque as used herein does not necessarily mean that the entity entirely blocks all light, but merely that it filters out a characteristic and measurable part of light striking it, so that light emitted by a particular light source without passing through the entity can be differentiated from light emitted by the light source and occluded by the entity. It will be appreciated that this effect may be limited to particular wavelengths. There are provided two light sources 121, 122 situated on one side of the road, and two imaging devices 131, 132 each having a respective known field of view, each respective known field of view φ₁, φ₂ which as shown both include both light sources 121, 122. The relative positions of the two imaging devices 131, 132, and the two light sources with respect to the environment are known. The system 110 is adapted to receive input from each imaging device 131, 132, and to determine for each light source 121, 122 in the field of view φ₁ respectively φ₂ of each imaging device whether that respective light source is occluded.

As shown, the entity 101 is occluding the beam 123 from light source 121, and also occluding the beam 123 from light source 121.

The system further has access to a memory 111 storing a geometric model of the environment including the positions of the imaging devices 121, 122 and optionally the light sources 131, 132. The memory 111 may be integrated in the system 111, or a remote or separate unit which the system may access via a data network or other suitable communication channel. The system is further adapted to determine with reference to the geometric model and the determination as to whether each light source is occluded for each imaging device, where the entity is located. In the present example, since the first light source 121 is occluded from the point of view of the second imaging device 132, and the second light source 122 is occluded from the point of view of the first imaging device 131, the system 110 may deduce the position of the entity 101 as being at the intersection of the two rays 123, 124. This deduction may be performed on the basis of a variety of geometrical processes. For example, the system may, for each imaging device, consider outermost rays in a continuous set of occluded rays, and plot a virtual ray at an angle bisecting these two outermost rays, and consider the entity to be located at the point where these virtual rays intersect in the environment. In a case where the virtual rays do not all intersect at the same point, the entity may be considered to be located at the centroid of the polygon defined by the virtual rays. Alternatively, the polygon defined at the intersections of the outer rays may be considered directly, and the centroid of that polygon considered to correspond to the location of the entity. Further variants of these approaches, or other such approaches as mentioned elsewhere in the present text or as may occur to the skilled person are further incorporated herein.

It will be appreciated that a simple example is presented here for ease of comprehension, and as such may rely on certain assumptions, for example the typical size of the entity.

It will be appreciated that by increasing the number of light sources, or the number of imaging devices, or both, the precision of determinations may be improved, and reliance on assumptions of this kind reduced.

Figure 2 shows a second embodiment, with a larger number of light sources.

Specifically, as shown figure 2 provides light sources 201, 202, 203, 204, 205, 206, 207, 208, 209, 210, 211, 212, 213, 214, 215, 216, 217, 218, 219, 220, 221, 222, 223, 224, 225, 226, 227, 228 and 229 in an environment 200. There are further provided three imaging devices 231, 232 and 233, and two opaque entities 251, 252. This figure is conceptually equivalent to figure 1, but serves to demonstrate how increasing the number of light sources and/or the number of imaging devices improves the resolution of the system. Specifically, as shown light source 203 is occluded with respect to imaging device 233, light source 211 is occluded with respect to imaging device 231, light source 227 is occluded with respect to imaging device 232. On the basis of these three occlusions the system 110 can determine with relatively good accuracy the location of entity 251. Similarly, as shown light source 227 is occluded with respect to imaging devices 232 and 233, and light source 222 is occluded with respect to imaging device 232. On the basis of these three occlusions, the system 110 can determine with relatively good accuracy the location of entity 252.

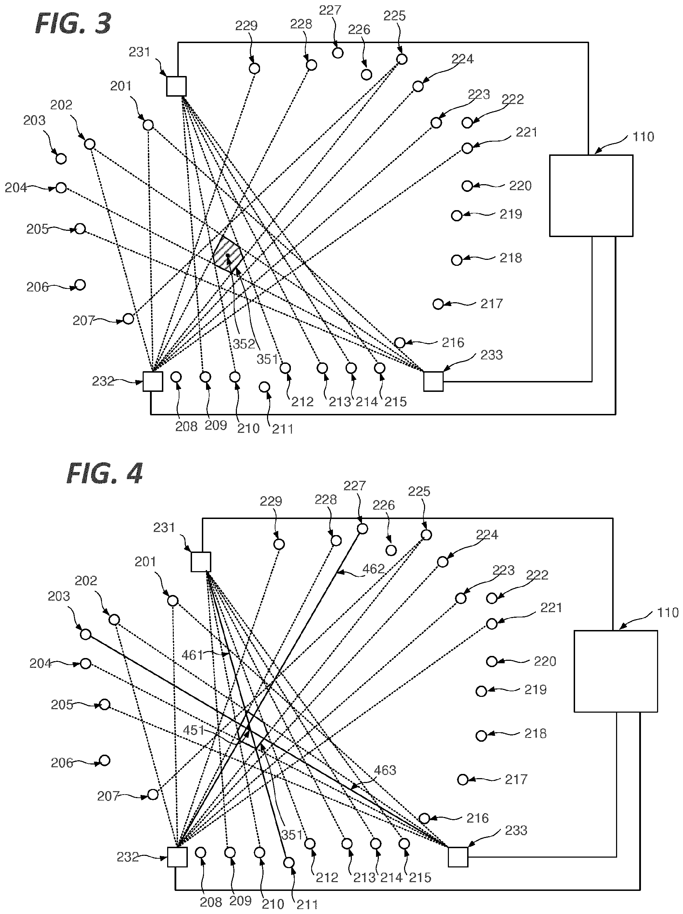

Figure 3 shows the embodiment of figure 2 as seen from the perspective of the system 110. As described above with respect to figure 2, the entity 251 is shown as a rectangle, as may be expected for example in the case of a vehicle. It may furthermore be borne in mind that on the basis of figure 2 as described, the system 110 may not be able to resolve the position of the entity 251 as being exactly that shown. In fact, on the basis of the occlusions described above, the entity 251 may be determined to lie entirely within the polygon 351. On this basis, the system 101 may assume the position of the entity 251 to lie at the centre of the polygon 351. The centre may conveniently be determined as the centroid of the polygon.

By the same token, although the polygon cannot be considered to exactly reflect the size or shape of the entity 251, the size of the polygon nevertheless indicates the maximum possible size of the polygon, the likely real size being somewhat smaller.

Accordingly, the system may further be adapted to determine on the basis of the geometric model of the environment and the determination as to the light sources occluded for each imaging device, the size of the entity.

Figure 4 shows the embodiment of figure 2 as seen from the perspective of the system 110 in further detail. As described above with respect to figure 2, the entity 251 is shown as a rectangle, as may be expected for example in the case of a vehicle. It may furthermore be borne in mind that on the basis of figure 2 as described, the system 110 may not be able to resolve the position of the entity 251 as being exactly that shown. While as discussed with reference to figure 3, the entity 251 may be assumed not to be larger than the polygon 351, the minimum size of the entity is less clear. The entity may be presumed to be large enough to occlude the respective rays 461, 462, 463 from light source 203 to imaging device 233, from light source 211 to imaging device 231, and from light source 227 to imaging device 232. If it is assumed that the entity 251 is itself a solid non-convex polyhedron, it may be presumed to have a minimum size 451 defined by the intersection of these three rays 461, 462, 463.

On this basis, the approximate size of the entity might be assumed to lie half way between the maximum size defined by the polyhedron 351, and the minimum size defined by the polyhedron 451.

By the same token, the centre of the entity may be assumed to lie somewhere between the centroid of the maximal polyhedron 351 and the centroid of the minimal polyhedron 451. For example, the central position of the entity may be assumed to lie half way between the centroid of the maximal polyhedron 351 and the centroid of the minimal polyhedron 451.

In further embodiments, the system as described with reference to figure 1 may be further adapted to perform successive determinations of the location of entities, and with reference to the timing of the successive determinations, obtain a speed and/or direction and/or size of the entity.

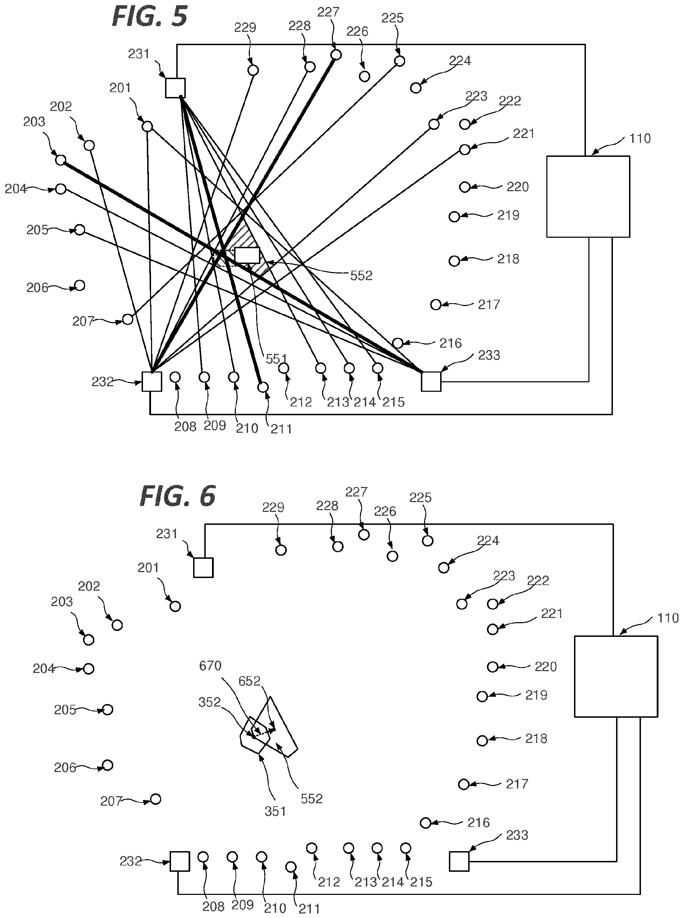

Figure 5 extends the embodiment of figure 2 to address the assessment of direction and velocity.

As shown in figure 5, the entity 551, corresponds to the entity 251 in a new position compared to figure 2. In this new position, light source 203 is no longer occluded with respect to imaging device 233, light source 211 is no longer occluded with respect to imaging device 231, and light source 227 is no longer occluded with respect to imaging device 232.

On the other hand, as shown, light source 202 is occluded with respect to imaging device 233, light source 212 is occluded with respect to imaging device 231, and light source 226 is occluded with respect to imaging device 232. On this basis, as described above, a new maximal polyhedron 552 is defined.

Figure 6 shows further detail of the assessment of direction and velocity in accordance with figure 5.

As shown in figure 6, the first maximal polyhedron 351 of figure 3 and its centroid 352 are plotted together with the new maximal polyhedron 552 of figure 5, and its centroid 652. Taking the centroids of the two polygons to indicate the assumed position of the entity during each measurement, a path 670 can be plotted as representing the path of the entity between measurements. The length of this path can be determined, and with reference to the timing of the measurements, that is to say, the time elapsed between them, an estimation of entity speed obtained.

It will be appreciated that while the estimates of entity position in figures 3 and 6 demonstrate an error with respect to the actual positions of the entity 251 and 551 in figures 1 and 5 respectively, which as shown suggests an exaggerated movement upward, by taking successive measurements and applying a rolling average or other smoothing effect such errors can be minimised.

It will also be appreciated with respect to the earlier discussion concerning entity size, across a sequence of measurements for a particular entity the measurements may be expected to converge on an increasingly accurate estimation of size, since the actual maximum size of the entity may be considered to be equal to the smallest estimation of maximum size across all measurements, and the actual minimum size of the entity may be considered to be equal to the largest estimation of minimum size across all measurements.

It will be appreciated that, while figure 6 is described on the basis that the centroid of each maximal polygon is taken to represent the position of the entity, improved estimations for example as described above taking a position between the centroid of the maximal polygon and the centroid of the minimal polygon for each measurement may be applied in some embodiments.

In accordance with certain further embodiments, once estimations of the direction and speed of one or more entities are available, their future paths may be predicted.

These predicted paths may then be compared to spatial definitions of other features in the environment. Such features may comprise physical entities such as walls, buildings, or other such obstacles. Such features may also include abstract entities such as authorised paths, boundaries to authorised regions, defined locations, and the like. These spatial definitions may conveniently be stored in a memory of the system. On this basis, the system may further be adapted to predict a collision between one or more entities and any such feature with reference to the speed and direction of the entity. Similarly, the system may further be adapted to predict a deviation between one or more entities and a path defined by any such features with reference to the speed and direction of the entity. The system may further be adapted to predict a collision between two or more entities with reference to the speed and direction of the entities. In this regard it will be appreciated that the system may cover two or three dimensional spaces. In any of these cases the system may be further adapted to issue a warning signal and/or calculate and issue instructions determined to avert the predicted collision or return to the proper path.

Embodiments such as those described above may be used in combinations with one or more further location systems. Such location systems may include GNSS, radar, sonar, lidar, Passive Infrared, image recognition or any other such system, or a combination of such systems. As such, the system 110 may be further adapted to combine entity location information obtained in accordance with an embodiment of the invention with data from one or more further locations systems.

The data from the further locations systems may be combined with the location and/or size, direction and/or speed data obtained in accordance with the present invention so as to obtain a higher resolution indication of the location of the entity, that is to say a representation supporting a higher degree of granularity. Similarly, the combination of the data from the further locations systems with the location and/or size, direction or speed data obtained in accordance with the present invention may be performed so as to obtain an indication of the location of the entity having a higher reliability level.

As mentioned above, the system 110 may be adapted to emit a warning signal on the basis of determinations it makes. More generally, the system may additionally comprise a communication interface adapted to transmit any data derived in accordance with an embodiment, such as for example the location, speed, direction of movement, projected position, predicted collision or departure from authorised space, and the like for one or more entities, possibly accompanied with other information reflecting the environment in which the entity is located, to a complementary and/or external system.

Similarly, the system may be adapted to generate a graphical representation of any data derived in accordance with an embodiment, such as for example the location, speed, direction of movement, projected position, predicted collision or departure from authorised space, and the like for one or more entities, possibly accompanied with other information reflecting the environment, for display to a user. Such a graphical representation may for example take the form of a plan, chart or map of the environment, situating the entity or entities therein. Still further, the system may comprise an image processor adapted to generate the graphical representation (which may be two or three dimensional) of at least a part of the environment, and the location of the entity as determined therein.

A system as described with reference to the foregoing embodiments may prove useful in many contexts, as different as such as malls, airports, cowsheds, stables, museums or any place where lights exists or can be adapted, with potential moving entities around. Many man-made environments lend themselves well to implementations of the present invention, such as motorways, airports railway lines and yards, and shipping ports, where numerous artificial light sources are available. Once such implementation lies in ground based Air Traffic Control, where planes on the ground in an airport must be monitored as they move between runway and stand-in this context, as in others for example as listed above, the density of regular light sources on the ground, make the detection of a sequence of changes of the intensity of light sources can conveniently provide the notification that an aircraft or a vehicle is occluding these lights. As such the system may detect the current location of the moving object with reduced need for triangulation. Furthermore, the system may compute the actual speed of such moving objects.

In certain further embodiments, the system may support additional processing to improve the accuracy and/or reliability of calculations in accordance with the invention. For example, the sensitivity of the system, light frequency detection range, detector field of view, reaction time (hysteresis) and the like. Such adjustments may be performed automatically, or semi-automatically with the benefit of human input, on the basis of machine learning, analytics or artificial intelligence techniques.

In certain embodiments, the position and optionally speed and/or size of an entity such as a vehicle in an environment such as an airport, motorway, shipping port or the like may be determined by monitoring a plurality of light sources for occlusion. These light sources may be arbitrary light sources as provided in the environment for unrelated purposes. On the basis of the known location of the light sources and the imaging devices by means of which of the light sources are monitored, as well as knowledge of the orientation and field of view characteristics of the imaging devices, and in some cases of other physical constraints imposed on the movement of vehicles in the environment, the position of a entity can be deduced.

The applications may thus include security, intruder detection, emergency evacuation, avoiding collisions or other accidents, counting of entities, and so forth.

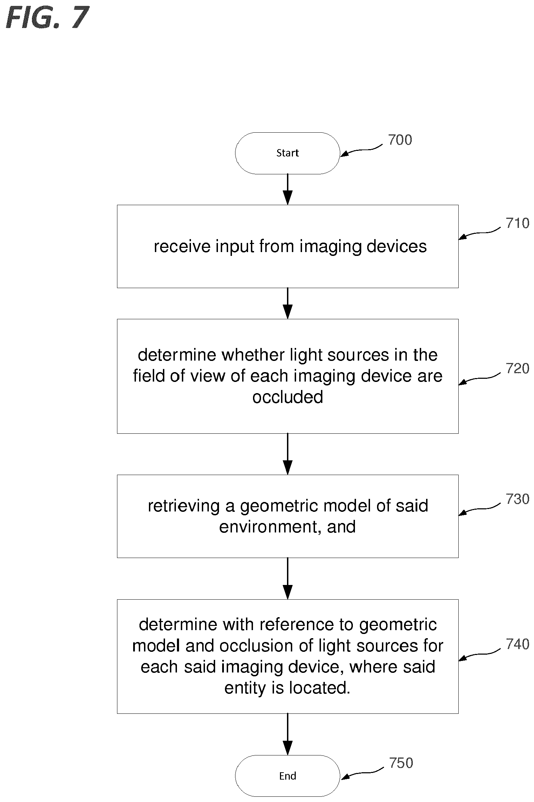

Figure 7 presents the steps of a method in accordance with an embodiment.

As shown, there is provided a method of locating an opaque entity in an environment comprising a plurality of light sources and one or more imaging devices each having a respective field of view, each respective field of view including at least one light source, in known positions relative to the environment.

The method starts at step 700 before proceeding at step 710 at which input from a plurality of the imaging devices is received. The method next proceeds at step 720 to determine for a plurality of the light sources in the field of view of each of the plurality of imaging devices whether the respective light source is occluded. The method next proceeds to step 740 at which a geometric model of the environment is retrieved, and at step 750 the method then determines with reference to the geometric model retrieved at step 730, and the determination as to the light sources occluded for each of the plurality of imaging devices obtained at step 720, where the entity is located.

It will be appreciated that the method of figure 7 may be adapted or extended to implement any of the embodiments or variants thereof described above, for example with reference to figures 1 to 6.

It will be appreciated that the steps of the method of figure 7 need not be performed in the sequence presented- for example, the step of retrieved the geometric model 730 may be performed at any convenient juncture.

The steps of figure 7 may be performed by software only and/or by hardware and software.

Software embodiments include but are not limited to applications, firmware, resident software, microcode, etc. The invention can take the form of a computer program product accessible from a computer-usable or computer-readable medium providing program code for use by or in connection with a computer or an instruction execution system.

A computer-usable or computer-readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

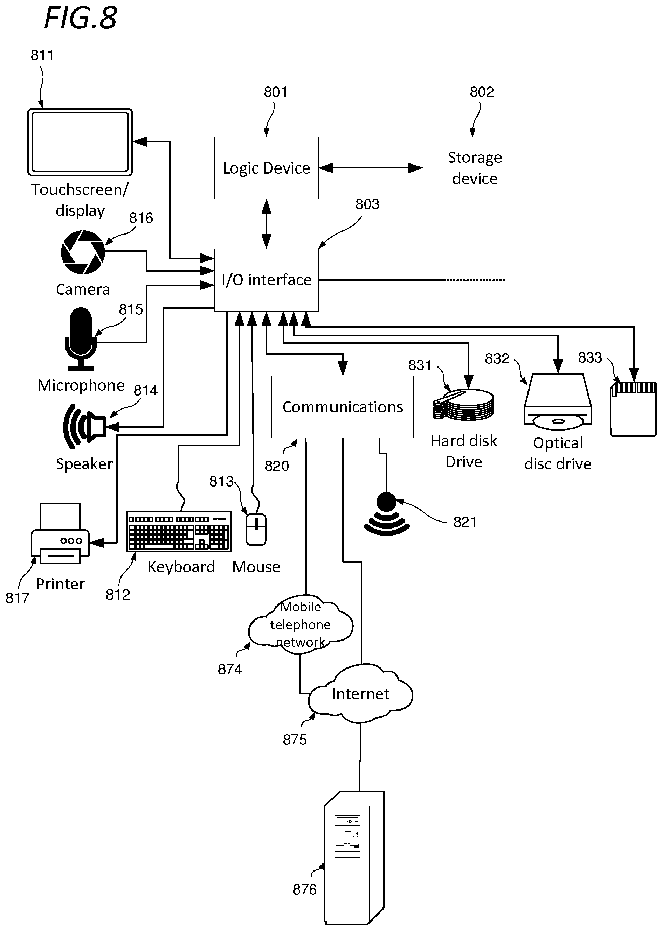

Figure 8 shows a generic computing system suitable for implementation of embodiments of the invention.

A shown in figure 8, a system includes a logic device 801 and a storage device 802. The system may optionally include a display subsystem 811, input/output subsystem 803, communication subsystem 820, and/or other components not shown.

Logic device 801 includes one or more physical devices configured to execute instructions. For example, the logic device 801 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 801 may include one or more processors configured to execute software instructions. Additionally or alternatively, the logic device may include one or more hardware or firmware logic devices configured to execute hardware or firmware instructions.

The system of figure 8 may be used to implement embodiments of the invention.

For example a program implementing the steps described with respect to figure 7 may be stored in storage device 802 and executed by logic device 801. The system of figure 8 may constitute the system 110 as described above. The imaging devices 131, 132, 231, 232, 233 may be embodied in cameras 816 or by further devices in communication via the communication interface 820 or otherwise. The display 811 may display the graphical representation of the location of the entity or entities, and as the case may be elements of the environment, and may receive the user input through a touch screen interface, or through the mouse, camera other interface device as described herein. Accordingly the invention may be embodied in the form of a computer program.

When included, display subsystem 811 may be used to present a visual representation of data held by a storage device. This visual representation may take the form of a graphical user interface (GUI). As the herein described methods and processes change the data held by the storage device 802, and thus transform the state of the storage device 802, the state of display subsystem 811 may likewise be transformed to visually represent changes in the underlying data. Display subsystem 811 may include one or more display devices utilizing virtually any type of technology for example as discussed above. Such display devices may be combined with logic device and/or storage device in a shared enclosure, or such display devices may be peripheral display devices. An audio output such as speaker 814 may also be provided.

When included, input subsystem may comprise or interface with one or more user-input devices such as a keyboard 812, mouse 813, touch screen 811, or game controller (not shown). One or more cameras 816 may be provided in direct communication with the i/o interface 803. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone 815 for speech and/or voice recognition; an infrared, colour, stereoscopic, and/or depth camera 816 for machine vision and/or gesture recognition; a head tracker, eye tracker, accelerometer, and/or gyroscope for motion detection and/or intent recognition; as well as electric-field sensing componentry for assessing brain activity. The Input/output interface 803 may similarly interface with any other transducer device as may occur to the skilled person. For example, the system may interface with a printer 817. The Input/output interface 803 may similarly interface with a Global Navigation Satellite System (GNSS), which in certain embodiments as described above may, where provided, constitute the source of the second site identification value.

When included, communication subsystem 820 may be configured to communicatively couple computing system with one or more other computing devices. For example, communication module of communicatively couple computing device to remote service hosted for example on a remote server 876 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 874, or a wired or wireless local- or wide-area network. In some embodiments, the communication subsystem may allow computing system to send and/or receive messages to and/or from other devices via a network such as Internet 875. The communications subsystem may additionally support short range inductive communications with passive or active devices (NFC system 821, RFID, UHF, etc).

The system of figure 8 is intended to reflect a broad range of different types of information handling system. It will be appreciated that many of the subsystems and features described with respect to figure 8 are not required for implementation of the invention, but are included to reflect possible systems in accordance with the present invention. It will be appreciated that system architectures vary widely, and the relationship between the different sub-systems of figure 8 is merely schematic, and is likely to vary in terms of layout and the distribution of roles in systems. It will be appreciated that, in practice, systems are likely to incorporate different subsets of the various features and subsystems described with respect to figure 8.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A system for locating an opaque entity in an environment comprising
a plurality of light sources, and
one or more imaging devices each having a respective field of view, each respective field of view including at least one light source,
the system being adapted
to receive input from a plurality of imaging devices, and
to determine for each light source in the field of view of each of plurality of imaging devices whether that respective light source is occluded,
the system further having access to a memory, the memory being suitable for storing a geometric model of the environment including the positions of the plurality of imaging devices, the system being further adapted to determine with reference to the geometric model and the determination as to the light sources occluded for each of the plurality of imaging devices, where the entity is located.

2. The system of claim 1 wherein the geometric model additionally comprises the positions of the light sources.

3. The system of claim 1 or 2 wherein the system is further adapted to identify respective light sources in the field of view of two or more respective imaging devices, and to determine the position of the respective light sources with respect to the environment.

4. The system of any preceding claim wherein the system is further adapted to perform successive determinations of the location of the entity, and with reference to the timing of the successive determinations obtain a speed and direction of the entity.

5. The system of any preceding claim wherein the memory further comprises spatial definitions of features in the environment, wherein the system is further adapted to predict a collision between the entity and any feature with reference to the speed and direction of the entity.

6. The system of any preceding claim wherein the system is further adapted to determine on the basis of the geometric model of the environment and the determination as to the light sources occluded for each imaging device, the size of the entity.

7. The system of any preceding claim wherein the system is further adapted to combine entity location information obtained in accordance with any preceding claim with data from one or more further location systems.

8. The system of claim 7 wherein the data from or more further location systems includes radar information.

9. The system of claim 7 or 8 wherein the system is further adapted to combine the data from one or more further location systems so as to obtain a higher resolution indication of the location of the entity.

10. The system of claim 7, 8 or 9 wherein the system is further adapted to combine the data from one or more further location systems so as to obtain an indication of the location of the entity having a higher reliability level.

11. The system of any preceding claim further comprising a communication interface adapted to transmit the determination of where the entity is located to an external system.

12. The system of any preceding claim further comprising an image processor adapted to generate a graphical representation of at least a part of the environment, and the location of the entity as determined therein.

13. The system of any preceding claim wherein the system is adapted to determine the location of a plurality of entities in the environment.

14. A method of locating an opaque entity in an environment comprising a plurality of light sources and one or more imaging devices each having a respective field of view, each respective field of view including at least one light source, in known positions relative to the environment, the method comprising the steps of:
receiving input from a plurality of imaging devices,
determining for a plurality of light sources in the field of view of each of the plurality of imaging devices whether that respective light source is occluded,
retrieving a geometric model of the environment, and
determining with reference to the geometric model and the determination as to the light sources occluded for each of the plurality of imaging devices, where the entity is located.

15. A computer program comprising instructions adapted to implement the steps of claim 14.
